# EUROPEAN PATENT APPLICATION

(11) **EP 4 002 241 A1**
(43) Date of publication of application: **25.05.2022**
(21) Application number: 21207706.9
(22) Date of filing: 11.11.2021
(51) Int. Cl.: G06Q 10/06

(54) **ENERGY USE PURPOSE MANAGEMENT SYSTEM AND ENERGY USE PURPOSE MANAGEMENT METHOD**

(30) Priority: 17.11.2020 JP 2020190738
(71) Applicant: Hitachi, Ltd., Chiyoda-ku, Tokyo 100-8280 (JP)
(72) Inventor: NAKANO, Michiki, Tokyo 100-8280 (JP); RISSEN, Kazumi, Tokyo 100-8280 (JP); ANDOU, Nobuyoshi, Toyko 100-8280 (JP); MARUYAMA, Yukinobu, Tokyo 100-8280 (JP); YAMAGUCHI, Masakazu, Tokyo 100-8280 (JP)
(74) Representative: MERH-IP Matias Erny Reichl Hoffmann Patentanwälte PartG mbB

(57) **Abstract**

Provided is an energy use purpose management system, comprising a processor 111 and a storage device 113, wherein the storage device 113 stores used power amount information that indicates an amount of power used by each device, and condition information that includes a condition to determine whether purposes of power use are private or work-related on the basis of the amount of power used by each device, and wherein the processor 111 classifies an amount of power used included in the used power amount information as an amount of power used for private purposes or an amount of power used for work-related purposes.

## Description

### BACKGROUND OF THE INVENTION

The present invention relates to a public/private separation system and a public/private separation method for energy consumption that supports public/private separation regarding the amount of energy consumed by an employee at a location other than a workplace, such as a primary or secondary residence of the employee, by appending information based on the purpose of use.

Japanese Patent Application Laid-Open Publication No. 2017-162340 (Patent Document 1) is known background art of the present technical field. Patent Document 1 discloses a technique in which the amount of power used through telecommuting by an employee is determined, this usage amount is conveyed to an infrastructure provider, and the power consumption calculated by the infrastructure provider is conveyed to the company that employs the employee.

### SUMMARY OF THE INVENTION

Using the technique disclosed in Patent Document 1, fees generated when an employee engaging in remote work uses infrastructure can be easily divided into fees generated for remote work and fees generated for private use, enabling adjustment of fees. However, in the case of the technique disclosed in Patent Document 1, it is necessary for the company employing the employee to coordinate with the infrastructure providers of the respective employees, resulting in a massive effort required for management thereof

The present invention takes into consideration this problem and an object thereof˙is to provide a system and a method by which, in a company employing an employee, value equivalent to energy consumed during remote work can be returned to the employee without coordinating with the infrastructure provider of the employee.

In order to solve at least one of the foregoing problems, a representative example of the present invention is an energy use purpose management system, comprising a processor and a storage device, wherein the storage device stores used power amount information that indicates an amount of power used by each device, and condition information that includes a condition to determine whether purposes of power use are private or work-related on the basis of the amount of power used by each device, and/or wherein the processor classifies an amount of power used included in the used power amount information as an amount of power used for private purposes or an amount of power used for work-related purposes.

According to a representative aspect of the present invention, it is possible to provide a means for easily separating used power into private and work-related use for an employee who works at a location other than the workplace such as the primary or secondary residence of the worker. Problems, configurations, and effects other than what was described above are made clear by the description of embodiments below.

### BRIEF DESCRIPTION OF THE DRAWINGS

FIG. 1 shows an example of a block diagram of the overall configuration of an energy public/private separation system according to Embodiment 1.
FIG. 2 is a block diagram showing a hardware configuration example of a public/private separation management system of Embodiment 1.
FIG. 3 is a descriptive view showing an example of a configuration of a used power amount data of Embodiment 1.
FIG. 4 is a descriptive view showing an example of a configuration of a public/private separation data of Embodiment 1.
FIG. 5 is a descriptive view showing an example of a configuration of a public/private separation condition data of Embodiment 1.
FIG. 6 is a flowchart of a public/private separation data generation process of Embodiment 1.
FIG. 7 is a descriptive view showing an example of a configuration of a point return rate data of Embodiment 1.
FIG. 8 is a descriptive view showing a used service conversion rate data according to Embodiment 1.
FIG. 9 is a block diagram showing an example of an installation of a power amount measurement device of Embodiment 2.
FIG. 10 is a block diagram showing an example of an installation of a power amount measurement device of Embodiment 3.
FIG. 11 is a block diagram showing an example of an installation of a power amount measurement device of Embodiment 4.
FIG. 12 shows an example of a block diagram of the overall configuration of an energy public/private separation system according to Embodiment 7.
FIG. 13 is a descriptive view showing an example of a point usage history data of Embodiment 7.

### DETAILED DESCRIPTION OF EMBODIMENTS

Embodiments of the present invention will be described below with reference to drawings.

### [Embodiment 1]

The present embodiment describes an example of a system that can provide a means for easily separating private and work-related power use, at locations other than a workplace such as a primary or secondary residence, by an employee who works at such locations, and by which it is possible for a company that employs the employee to return the cost for work-related power consumption on the basis of rules determined by the company. In the description below, "public use" is sometimes used to refer to "work-related use," and the separation of the used power amount into public (that is, for work-related use) power consumption and private (that is, for private use) power consumption is referred to as public/private separation.

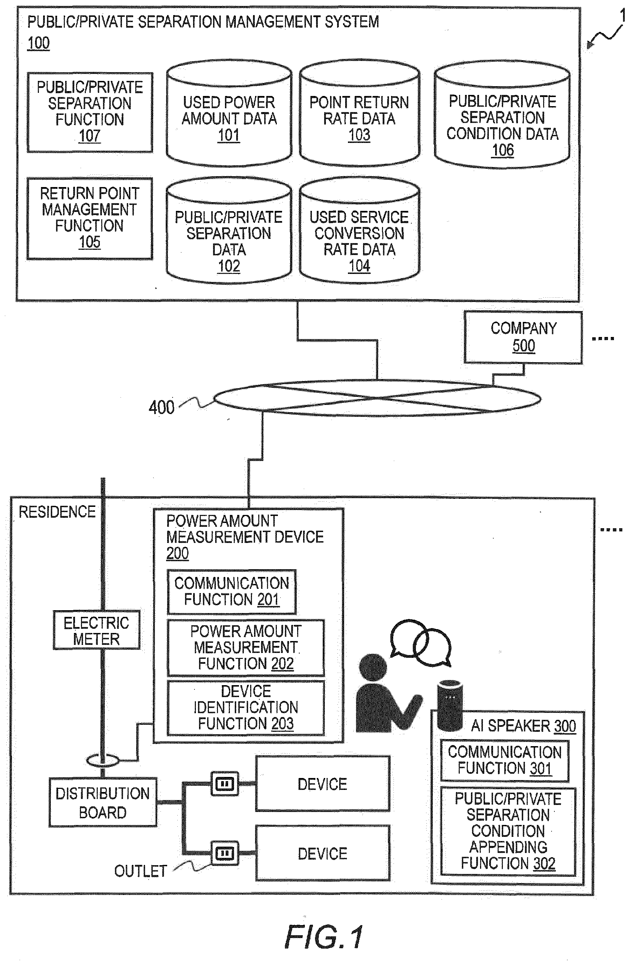

FIG. 1 shows an example of a block diagram of the overall configuration of an energy public/private separation system according to Embodiment 1.

An energy public/private separation system 1 is constituted of a public/private separation management system 100, a power amount measurement device 200, and an AI speaker 300. The public/private separation management system 100 manages information such as the amount of power used by the employee, devices used, purpose of use, and location, and calculates the amount to be returned to the employee on the basis of the accumulated information. The power amount measurement device 200 is installed in a distribution board of a residence, and detects the consumed power amount, devices used, and the like. The AI speaker 300 is one means of inputting the device used and the purpose of use. The public/private separation management system 100, the power amount measurement device 200, and the AI speaker 300 are connected through a network 400. A company 500 employing the employee acquires the amount of power used by the employee for work-related purposes via the network 400, and implements a return to the employee based on the acquired amount of power used.

The public/private separation management system 100 includes a public/private separation function 107, used power amount data 101, public/private separation data 102, point return rate data 103, used service conversion rate data 104, a return point management function 105, and public/private separation condition data 106. The public/private separation function 107 separates the consumed power amount by the employee into the power amount for private use and the power amount for public use according to the used power amount data 101 and the public/private separation data 102.

The used power amount data 101 stores the used power amount for each device. The public/private separation data 102 stores information such as the devices used by the employee, the purpose of use, the organization pertaining to the purpose of use, the use location, the use time, and the consumed power amount. The point return rate data 103 stores the point conversion rate for when the employee converts the amount of power used for public purposes to points determined by the company to which the employee belongs.

The used service conversion rate data 104 stores a conversion rate for when the return points returned from the company to the employee are converted to a usage fee for various services provided by the company to the employee. The return point management function 105 uses the point return rate data 103 and the used service conversion rate data 104 to manage the points held by the employee and the point consumption amount when using the services. The public/private separation condition data 106 stores information regarding the conditions under which to perform public/private separation according to the used power amount data 101.

The power amount measurement device 200 includes a communication function 201, a power amount measurement function 202, and a device identification function 203. The communication function 201 transmits data such as the used power amount and the used devices to the public/private separation management system 100 via the network 400. The power amount measurement function 202 measures the used power amount. The device identification function 203 identifies the device that is connected to the distribution board and consuming power therefrom on the basis of the power amount and power waveform information measured by the power amount measurement function 202 and using power waveform information unique to each device, and calculates the consumed power amount of the device. Also, even when a plurality of devices are connected to the distribution board, the device identification function 203 uses the power waveform information or the like unique to each device, identifies the devices contributing to the used power amount, and calculates the consumed power amount of each of the devices.

By installing the power amount measurement device 200 by the main switch of the distribution board that is the source for supplying power to the residence and measuring the total used power amount, for example, it is possible to use the device identification function 203 to identify the in-use devices plugged into the outlets connected to the distribution board. Instead of being installed in the power amount measurement device 200, the device identification function 203 may be installed in a remote server that aggregates and manages data such as by being provided in the public/private separation management system 100. Also, the power amount measurement device 200 may be installed in an electric meter such as a smart meter installed in each household.

The device identification function 203 may also identify devices using an RFID over power line system. A configuration may be adopted in which an RFID chip provided with a device ID is installed in the device and the device identification function 203 reads the RFID chip installed in the connected device via the power line, thereby identifying the device, for example.

The AI speaker 300 includes a communication function 301 and a public/private separation condition appending function 302. The communication function 301 transmits information generated by the public/private separation condition appending function 302 to the public/private separation management system 100 via the network 400. The public/private separation condition appending function 302 analyzes speech uttered by the employee and generates various information, to be appended to the used power amount data, such as the devices in use, the purpose of use, the organization pertaining to the purpose of use, the use location, and the use time.

The public/private separation condition appending function 302 may have a manual input function via a GUI instead of (or in addition to) the voice input function to be used by the employee. The employee may input the purpose of use, the organization, the location, the start day/time, the end day/time, and, the like to the corresponding used power amount data 101 stored in the public/private separation management system 100, with reference to the used power amount data, for example. Also, the dates and times for public and private use may be set in advance, with the various information such as the device in use, the purpose of use, the organization pertaining to the purpose of use, the use location, and the use time being automatically appended according to the setting.

For example, conditions may be set in advance such as 9AM to 5PM on weekdays being for public use and other days and times being for private use. Also, an ID card of the employee and an ID card reader may be used, with the organization being read in from the ID card, and the start day/time and the end day/time being set with the reading of the card as a trigger. The ID card reader may be an independent device or may be installed in an outlet, an AC adapter, an outlet tap, a device, or the like.

Alternatively, the device in use, the purpose of use, the organization pertaining to the purpose of use, the use location, and the like may be associated in advance with the ID that identifies the power amount measurement device 200, and when the used power amount data is received by the public/private separation management system 100, the device in use, the purpose of use, the organization pertaining to the purpose of use, and the use location, which were associated in advance, may be set.

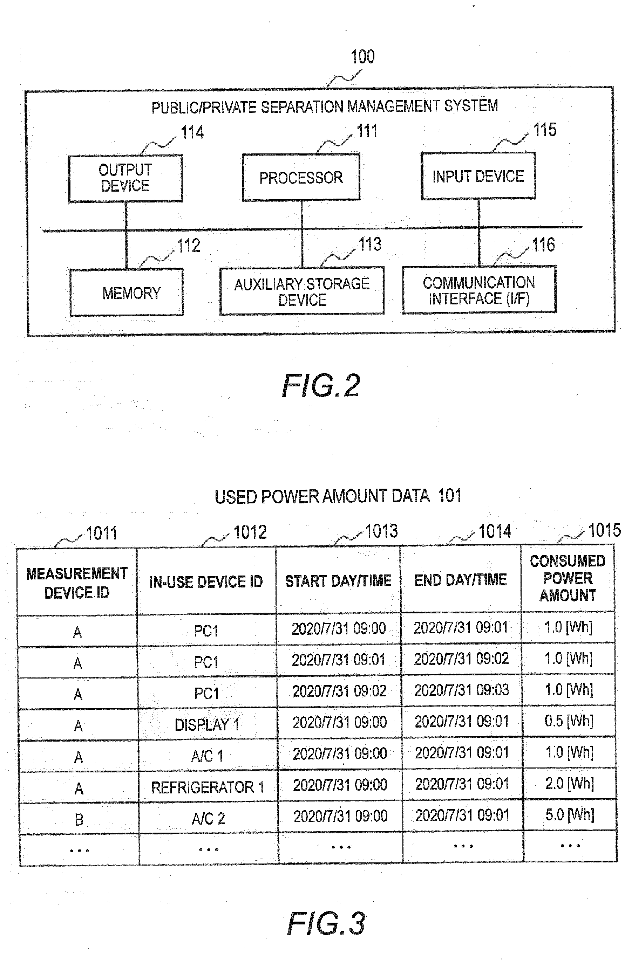

FIG. 2 is a block diagram showing a hardware configuration example of the public/private separation management system 100 of Embodiment 1.

The public/private separation management system 100 is constituted of a computer, for example. The public/private separation management system 100 includes a processor 111, a memory (primary storage device) 112, an auxiliary storage device 113, an output device 114, an input device 115, and a communication interface (I/F) 116. These constituent elements are connected to each other by a bus. The memory 112, the auxiliary storage device 113, or a combination thereof is a storage device, and stores programs and data used by the processor 111.

The memory 112 is constituted of a semiconductor memory, for example, and is primarily used to store data and programs currently being executed. The processor 111 executes various processes according to programs stored in the memory 112. Various functional units are realized as a result of the processor 111 operating according to the programs.

As a result of operating according to the corresponding programs, the processor 111 realizes the public/private separation function 107 and the return point management function 105, for example.

The auxiliary storage device 113 is constituted of a large capacity storage device such as a hard disk drive or a solid-state drive, and is used for long-term storage of programs and data. The used power amount data 101, the public/private separation data 102, the point return rate data 103, the used service conversion rate data 104, the public/private separation condition data 106, and the like may be stored in the auxiliary storage device 113, for example.

The processor 111 can be constituted of one or more processing units, and can include one or more computation units or a plurality of processing cores. The processor 111 can be implemented as one or more central processing units, a microprocessor, a microcomputer, a microcontroller, a digital signal processor, a state machine, a logic circuit, a graphics processing unit, a system-on-a-chip, and/or a given device that operates signals on the basis of a control instruction.

The programs and data stored in the auxiliary storage device 113 are loaded to the memory 112 during start up or as necessary, and the programs are executed by the processor 111, thereby causing the various processes of the public/private separation management system 100 to be executed. Thus, the processes executed by the public/private separation management system 100 below are processes by the processor 111 or the programs.

The input device 115 is a hardware device for the user to input instructions, information, and the like to the public/private separation management system 100. The output device 114 is a hardware device for presenting various images for input and output, and is a display device or a printing device, for example. The communication I/F 126 is an interface for connecting to the network 400.

The functions of the public/private separation management system 100 can be installed in a computer system constituted of one or more computers including one or more processors and one or more storage devices that include a non-transitory storage medium. The plurality of computers communicate via the network. A configuration may be adopted in which some of a plurality of functions of the public/private separation management system 100 are installed in one computer and other functions are installed in another computer, for example.

FIG. 3 is a descriptive view showing an example of a configuration of the used power amount data 101 of Embodiment 1.

The used power amount data 101 has stored therein information pertaining to the used power amount measured by the power amount measurement device 200, the device that has consumed the power, and the time. The used power amount data 101 includes a measurement device ID 1011 for identifying the power amount measurement device 200, an in-use device ID 1012 for identifying the device (device in use) that has consumed power, a start day/time 1013 and an end day/time 1014 for power consumption by the device in use, and a consumed power amount 1015 indicating the amount of power consumed between the start day/time and the end day/time, for example.

Also, the used power amount data 101 may include position information. If the power amount measurement device 200 stores position information acquired from a GPS (Global Positioning System) device or the like, for example, then the acquired position information may be included in the used power amount data 101 and stored. This position information can be used for public/private separation through comparison with location information included in the public/private separation condition data 106 to be described later.

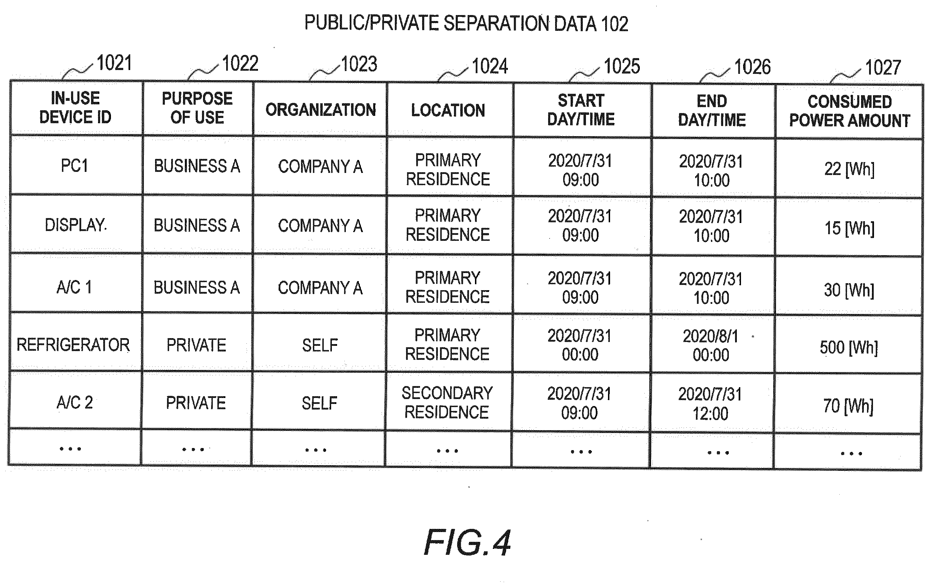

FIG. 4 is a descriptive view showing an example of a configuration of the public/private separation data 102 of Embodiment 1.

The public/private separation data 102 stores information such as the devices in use, the purpose of use, the organization pertaining to the purpose of use, the use location, the use time, and the consumed power amount inputted via the AI speaker 300. The public/private separation data 102 includes an in-use device ID 1021, a purpose of use 1022, an organization 1023 pertaining to the purpose of use, a location 1024, a start day/time 1025 for use of the device, an end day/time 1026 for use of the device, and a consumed power amount 1027, for example.

The consumed power amount 1027 can be generated by extracting, from the used power amount data 101, data from the start day/time 1025 to the end day/time 1026 as an ID key representing the device in use having the in-use device ID 1021, and calculating the sum of the consumed power amount 1015 of the extracted data.

The public/private separation data 102 shown in FIG. 4 is an example of data corresponding to one employee. The public/private separation data 102 may further be provided with an array of employee IDs or the like, and manage information regarding a plurality of employees using one table. In determining public/private separation in company, public or private use is determined with reference to the purpose of use 1022. Also, determination of public use may be made using information such as the in-use device ID and the location. If the in-use device ID of the device in use by the employee indicates a product of the company, then a determination may be made that the use of the device is public.

The public/private separation data 102 may be made so as to be viewable via the internet in order for the employee to be able to view their own data. At this time, the public/private separation management system 100 combines the public/private separation data 102 with the amount of power measured by the electric meter of the residence, and displays the proportions of power consumed by each device and the proportions of public and private use in relation to the total power consumption of the entire residence. Information pertaining to points to be described below may be displayed in addition to information pertaining to the consumed power amount. By displaying CO2 emission points in relation to the consumed power amount, it is possible to confirm the amount of CO2 emissions from the power consumption, for example.

Also, the public/private separation management system 100 may calculate the CO2 emissions from the total consumed power amount of the entire residence, thereby displaying the proportions of CO2 emissions for public and private use, the proportions of CO2 emissions for the respective devices, or the like. Additionally, the public/private separation management system 100 may display the proportion of J-Credits (to be described later) in relation to the displayed CO2 emissions, thereby displaying the CO2 offset rate. In displaying various information, the public/private separation management system 100 may display the employee's rank by used power amount or the employee's rank by CO2 offset rate through comparison with other employees. By displaying information such as the ranking through comparison with other employees, it is possible to promote consciousness in the employee towards energy conservation and environmental contributions.

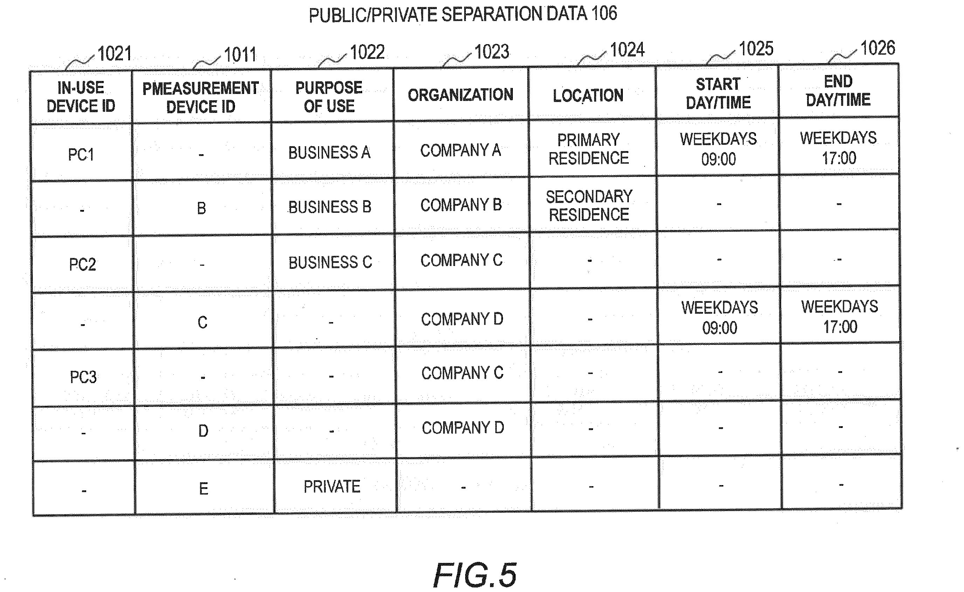

FIG. 5 is a descriptive view showing an example of a configuration of the public/private separation condition data 106 of Embodiment 1.

The public/private separation condition data 106 stores information regarding the conditions under which to perform public/private separation according to the used power amount data 101. The public/private separation condition data 106 includes the in-use device ID 1021, the measurement device ID 1011, the purpose of use 1022, the organization 1023, the location 1024, the start day/time 1025, and the end day/time 1026, for example.

By setting the in-use device ID, the purpose of use, the organization, the location, the start day/time, and the end day/time, power use is determined as being public and private on the basis thereof. If an employee used PC 1 from 9AM to 5PM on weekdays on the basis of the first record of the public/private separation condition data 106 shown in FIG. 5, then the public/private separation management system 100 determines that the employee did work A for a company A at home, extracts corresponding data from the used power amount data 101 with the in-use device ID, the start day/time, and the end day/time as keys, and calculates the total consumed power amount for the extracted data, for example.

On the other hand, for power measured using a measurement device B, a condition may be set that the power is only used for tasks related to work B for a company B without limitation on the device used. By setting conditions in advance for public/private separation or generating public/private separation condition data 106 using an input device such as a voice input device or a web browser, the public/private separation management system 100 extracts data corresponding to the conditions from the used power amount data 101, calculates the sum of the used power amount, and generates the public/private separation data 102 in combination with the public/private separation condition data 106.

The start day/time 1025 and the end day/time 1026 may be the start day/time and the end day/time for the working hours of the employee. In this case, the working hours may be a planned schedule or the actual working hours attained from attendance information. The planned schedule may be the working hours determined by work regulations or the like, or may be plan information inputted in advance by the employee, for example. The attendance information may, as described above, be attained using the ID card of the employee and the ID card reader. An example of using attendance information will be described in Embodiment 5 below.

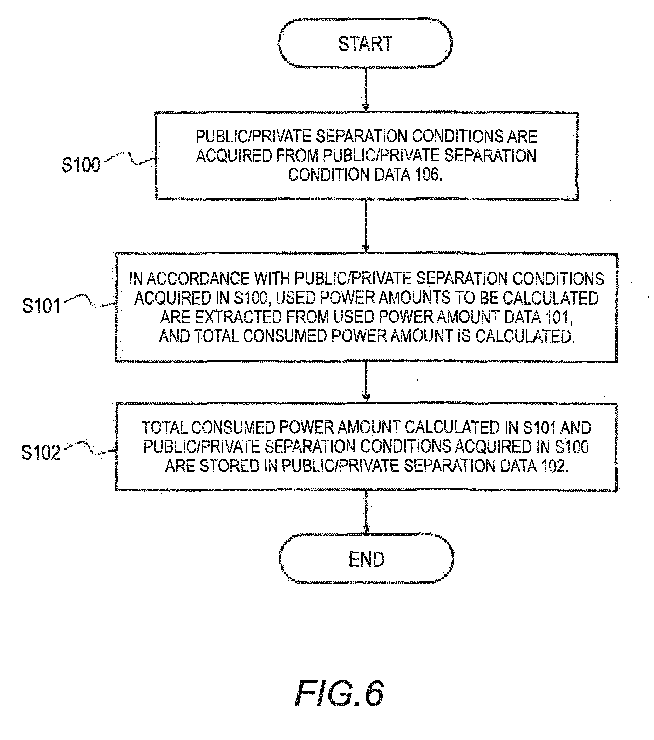

FIG. 6 is a flowchart of a public/private separation data generation process of Embodiment 1.

In S100, the public/private separation management system 100 acquires public/private separation conditions from the public/private separation condition data 106. In S101, in accordance with the public/private separation conditions acquired in S100, the public/private separation management system 100 calculates the used power amount to be calculated from the used power amount data 101 and calculates the total consumed power amount. In S102, the public/private separation management system 100 stores, in the public/private separation data 102, the total consumed power amount calculated in S101 in combination with the public/private separation conditions acquired in S100.

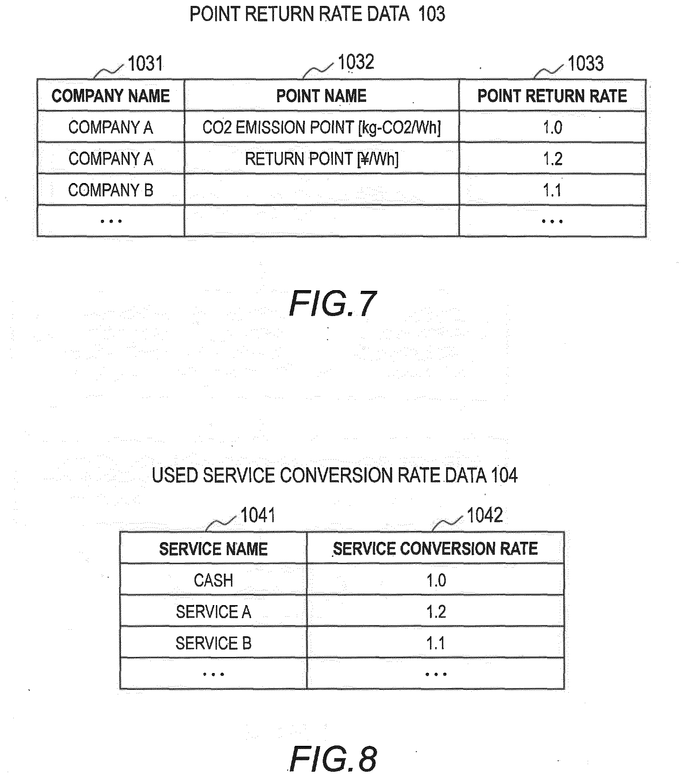

FIG. 7 is a descriptive view showing an example of a configuration of the point return rate data 103 of Embodiment 1.

The point return rate data 103 stores the point conversion rate for when the employee converts the amount of power used for public purposes to points determined by the company to which the employee belongs. The point return rate data 103 includes a company name 1031, a point name 1032, and a point return rate 1033.

As an example, the company A manages the CO2 emission amount for the amount of power used for public purposes by the employee for tasks pertaining to the company A as CO2 emission points (kg CO2), and procures environmental value such as J-Credits that allow for CO2 offsets. At this time, the conversion rate for calculating the CO2 emission amount from the amount of power (Wh) used by the employee is stored in the point return rate 1033. Specifically, a CO2 emission coefficient pertaining to a service provided by a power company, of which the employee is a customer at the employee's primary or secondary residence, is stored by the employee in the point return rate 1033.

By purchasing CO2 offsets on the basis of CO2 emission points, the company can report the CO2 generated through work performed by the employee in the employee's primary or secondary residence in an environmental report or the like as a deduction by the company.

The point return rate data 103 shown in FIG. 7 is an example of data corresponding to one employee. The point return rate data 103 may further be provided with an array of employee IDs or the like, and manage information regarding a plurality of employees using one table.

As another application, the company A may manage return points according to the amount of power and may return the points to the employee in order to provide equivalent value for the electricity cost generated through work performed by the employee at the employee's primary or secondary residence. At this time, the return rate for calculating the electricity cost return points to be returned to the employee from the amount of power (Wh) used by the employee is stored in the point return rate 1033. A power unit cost [kWh/¥] for the power supply service, of which the employee is a customer at the employee's primary or secondary residence, is set as the point conversion rate, for example. As a result, the company A can compensate the employee for electricity expenses generated at the primary or secondary residence due to work performed for the company A.

As another example, point conversion may be performed for the amount of power generated for private use in addition to the point conversion performed for the amount of power generated for public use. As this time, the point conversion rate may be set differently for public and private use. In the case of an AC adapter or an outlet tap described in Embodiment 3 below, for example, by being provided with CO2 offsets for public and private use for consumed power via the AC adapter or the outlet tap, the employee would proactively use this AC adapter or outlet tap, promoting better environmental consciousness.

The return point management function 105 calculates various points.

FIG. 8 is a descriptive view showing the used service conversion rate data 104 according to Embodiment 1.

The used service conversion rate data 104 represents a conversion rate for when the return points returned from the company to the employee are converted to a usage fee for various services provided by the company to the employee. Where the company sets the conversion rate for supplying cash to 1.0 (that is, 1 point is converted to 1 yen) for the employee in order to return the electricity cost for electricity used by the employee for work performed at the employee's primary or secondary residence, for example, the conversion rate may be set to 1.2 for points used for a service A other than cash (that is, 1 point is converted to services equivalent to 1.2 yen). By setting different conversion rates for each service, the company can encourage the employee to use services that the company wishes to emphasize.

Services other than cash include, for example, food product coupons that can be used in supermarkets or convenience stores, small investments towards renewable energy-based power plant construction operations, purchasing of environmental value for CO2 offsets for power consumed by the employee, purchasing of energy-saving household appliances, and purchasing of equipment necessary for remote work such as mobile devices or stationery.

The used service conversion rate data 104 shown in FIG. 8 is an example of data corresponding to one employee. The used service conversion rate data 104 may further be provided with an array of employee IDs or the like, and manage information regarding a plurality of employees using one table. The return point management function 105 calculates the number of points necessary for use of a service.

The company A would need to provide various services as described above for which the employee can use the returned points. Recently, there is increased expectation for corporate activities that emphasize environmental (E), social (S), and governance (G) metrics, and there is need for the entire corporation to contribute to ESG. The company A may, for example, limit the services for which the returned points can be used to services that enable the employee to actively contribute to ESG. A configuration may be adopted in which an ESG evaluation that is a numerical representation of efforts towards ESG or the like is displayed, and the employee can select a service on the basis thereof. As a result, it is possible to specify to the employee ESG fields that the company wishes to emphasize, and it is possible to anticipate an improvement in corporate value through ESG contributions.

Services used by the employee with returned points may be shared with other employees. By sharing the services used among employees, it is possible for the employee to be introduced to services previously unknown to the employee to promote use of the services. Also, returned points held by an employee may be given to other employees. Return points may also be given as an expression of gratitude among employees for mutual support for work-related tasks, for example.

The costs for various coupons may be borne by the company. If the company wishes to promote the health of employees by encouraging consumption of healthy foods, for example, health food coupons may be purchased by the company and provided as a service.

### [Embodiment 2]

In Embodiment 2, a case is described in which the power amount measurement device 200 is installed not in the distribution board, but in each outlet. Aside from the differences described below, the various components of the system of Embodiment 2 have the same functions as the components of Embodiment 1 that are assigned the same reference characters, and thus, descriptions thereof are omitted.

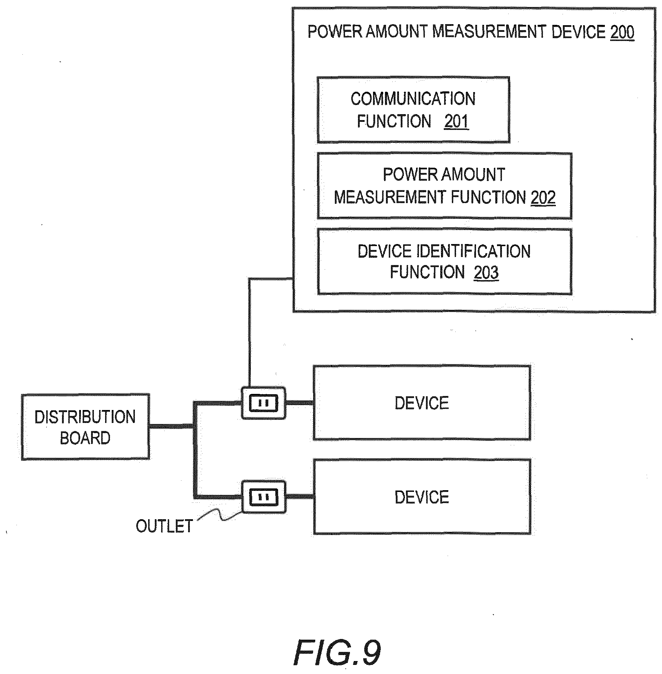

FIG. 9 is a block diagram showing an example of an installation of a power amount measurement device 200 of Embodiment 2.

As shown in FIG. 9, the power amount measurement device 200 may be installed in an outlet. By installing the power amount measurement device 200 in an outlet, the devices to be identified are limited to devices connected to the outlet, and thus, it is possible to anticipate increased accuracy in identifying the device by the device identification function 203. Also, if installing the power amount measurement device 200 in an outlet, if the device connected to the outlet is fixed, then the device identification function 203 may be omitted from the power amount measurement device 200. In the public/private separation management system 100, as long as the outlet, the power amount measurement device 200 installed in the outlet, and the device ID of the device connected to the outlet are managed, it is possible to generate the used power amount data 101.

### [Embodiment 3]

In Embodiment 3, a case is described in which the power amount measurement device 200 is installed not in the distribution board, but in an AC adaptor or an outlet tap. Aside from the differences described below, the various components of the system of Embodiment 3 have the same functions as the components of Embodiment 1 or 2 that are assigned the same reference characters, and thus, descriptions thereof are omitted.

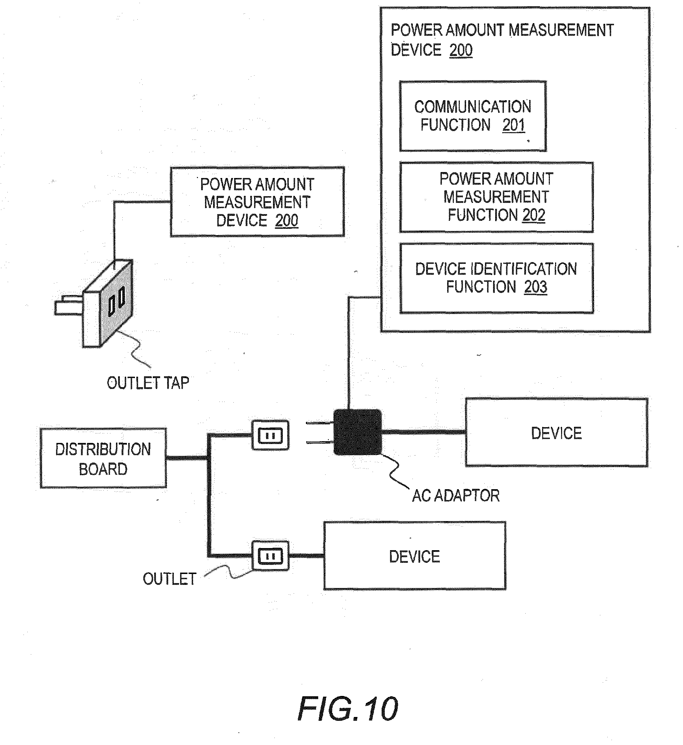

FIG. 10 is a block diagram showing an example of an installation of a power amount measurement device 200 of Embodiment 3.

As shown in FIG. 10, the power amount measurement device 200 may be installed in an AC adaptor or an outlet tap. By installing the power amount measurement device 200 in an AC adaptor or an outlet tap, the devices to be identified are limited to devices connected to the AC adaptor or the outlet tap, and thus, it is possible to anticipate increased accuracy in identifying the device by the device identification function 203. Also, this allows the power amount measurement device 200 to be carried around together with the AC adaptor or the output tap in which the power amount measurement device 200 is installed, and to be used in different places inside or outside of the primary residence. Examples of devices to which the AC adaptor or outlet tap is connected include electric devices and appliances such as a PC, a smartphone, a display, a refrigerator, and an air-conditioning unit.

Also, if installing the power amount measurement device 200 in an AC adaptor or an outlet tap, if the device connected is fixed, then the device identification function may be omitted from the power amount measurement device 200. In the public/private separation management system 100, as long as the AC adaptor or outlet tap, the power amount measurement device 200 installed therein, and the device ID of the device connected to the AC adaptor or the outlet tap are managed, it is possible to generate the used power amount data 101.

By installing the power amount measurement device 200 in an AC adaptor or an outlet tap, the power amount measurement device 200 can be carried around together with a mobile device, and it is possible to support public/private separation regarding the amount of power used even with outlets not equipped with the power amount measurement device 200.

Furthermore, it is possible to manage attendance by handling the duration for which the AC adaptor or the outlet tap is used as the working hours.

### [Embodiment 4]

In Embodiment 4, a case is described in which the power amount measurement device 200 is installed not in the distribution board, but in a device. Aside from the differences described below, the various components of the system of Embodiment 4 have the same functions as the components of Embodiments 1 to 3 that are assigned the same reference characters, and thus, descriptions thereof are omitted.

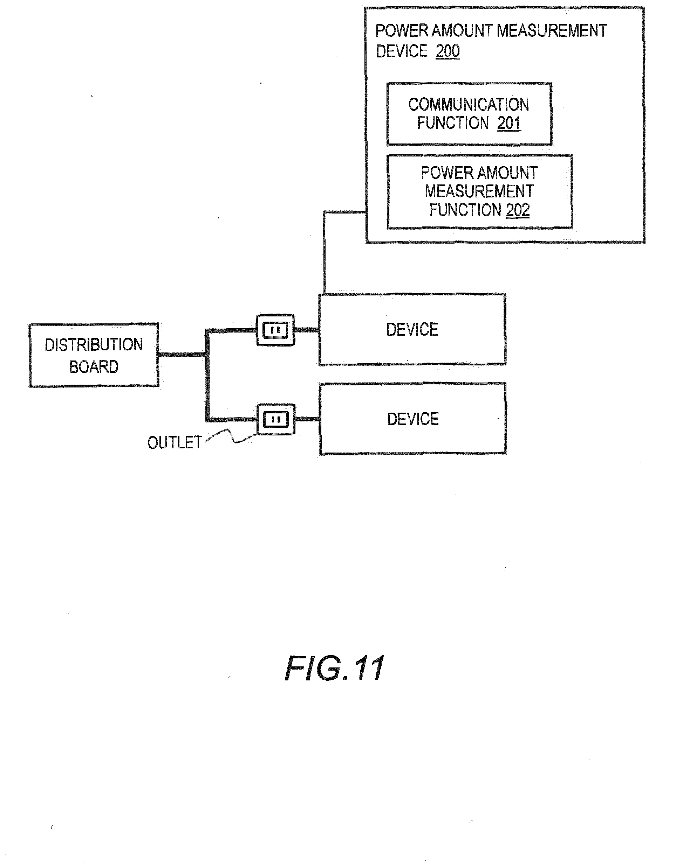

FIG. 11 is a block diagram showing an example of an installation of a power amount measurement device 200 of Embodiment 4.

As shown in FIG. 11, the power amount measurement device 200 may be installed in a device. In this case, it is possible to remove the device identification function from the power amount measurement device 200. In the public/private separation management system 100, as long as the relationship between the device and the power amount measurement device 200 installed in the device is managed, it is possible to generate the used power amount data 101.

By installing the power amount measurement device 200 in a device, it is possible to support public/private separation regarding the amount of power used even with outlets not equipped with the power amount measurement device 200.

### [Embodiment 5]

In Embodiment 5, a case is described in which the attendance data of the organization is used, instead of the start day/time and end day/time appended by the public/private separation condition appending function 302. Aside from the differences described below, the various components of the system of Embodiment 5 have the same functions as the components of Embodiments 1 to 4 that are assigned the same reference characters, and thus, descriptions thereof are omitted.

If the organization manages the clock-on time and clock-off time, then this data may be used to support public/private separation regarding the amount of power used. For example, if there is data indicating that the clock-on time is 9AM and the clock-off time is 5PM, then the public/private separation management system 100 can use this data to generate the public/private separation data 102 by calculating the amount of power consumed between the clock-on time and the clock-off time among the power usage data for the organization.

The clock-on time and the clock-off time described above may be attained using the ID card of the employee and the ID card reader. Also, those times may be held as the start day/time 1013 arid the end day/time 1014 of the public/private separation condition data 106 (FIG. 5).

### [Embodiment 6]

In Embodiment 6, a case is described in which the energy public/private separation system is managed by a third party, which is not associated with a company and employees of the company. Aside from the differences described below, the various components of the system of Embodiment 6 have the same functions as the components of Embodiments 1 to 5 that are assigned the same reference characters, and thus, descriptions thereof are omitted.

When a third party manages the energy public/private separation system, information only needed by the organization, out of the power usage data that is related to the privacy of employees, can be provided, which prevents the company from freely browsing the private information of the employees. It is also possible to allow employees to see the public/private separation data 102 via the Internet or the like, and select data to be submitted to the company for themselves.

### [Embodiment 7]

In Embodiment 7, a case is described in which the information managed by the public/private separation management system is utilized for other purposes. Aside from the differences described below, the various components of the system of Embodiment 7 have the same functions as the components of Embodiments 1 to 6 that are assigned the same reference characters, and thus, descriptions thereof are omitted.

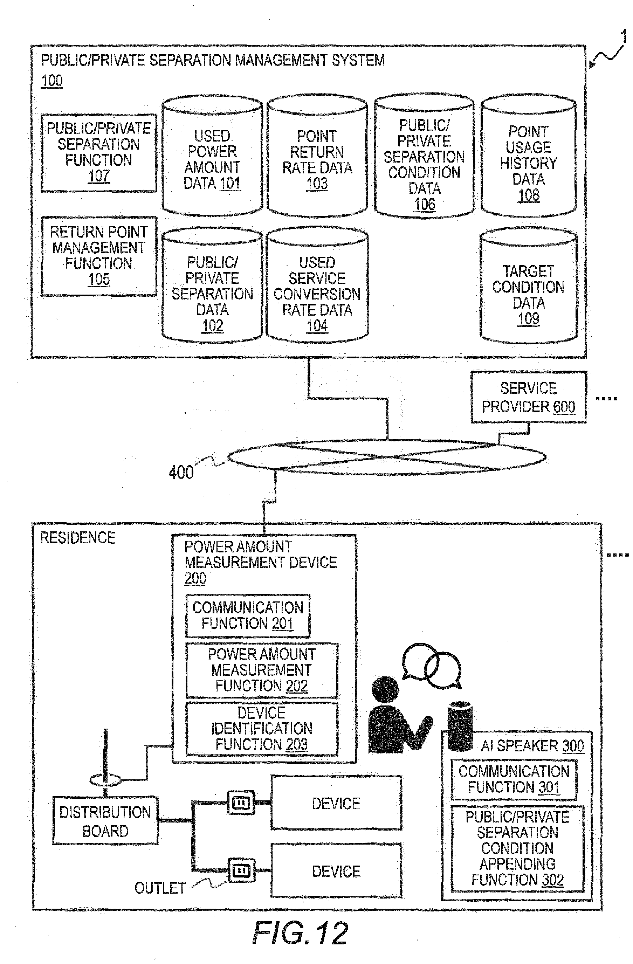

FIG. 12 shows an example of a block diagram of the overall configuration of an energy public/private separation system according to Embodiment 7.

As shown in FIG. 12, the public/private separation management system 100 of Embodiment 7 manages the point usage history of employees in point usage history data 108, and provides information such as the public/private separation data 102 and the point usage history data 108 to a service provider 600 for marketing purposes after removing information that can identify each individual such as the employee ID. The service provider 600 analyzes the acquired data to see if there are users who are a suitable target of its service, and provides conditions of users to whom the provider wishes to show advertising information regarding its service.

Based on the target condition data 109 indicating the target of advertising information provided by the service provider 600, the public/private separation management system 100 sends the advertising information to a user terminal such as a speaker or mobile phone (not shown in the figure) of the corresponding users. If an employee uses the service with the return points, the provider that has provided the advertising information may compensate the company for helping to encourage the employee to use the service.

The target condition data 109 may include information that specifies a threshold value of the amount of points used for the services registered in the point usage history data 108, for example. The target condition data 109 may also include information that specifies, as the conditions for the devices registered in the public/private separation data 102, the amount of power consumed as well as when, where, how often, and for what purpose those, devices used, and the like.

The point usage history data 108 and the target condition data 109 may be stored in the auxiliary storage device 113, as with other types of data.

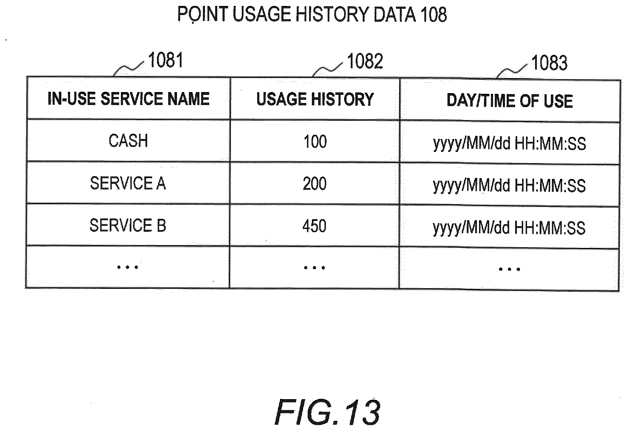

FIG. 13 is a descriptive view showing an example of the point usage history data 108 of Embodiment 7.

The point usage history data 108 manages an in-use service name 1081, a corresponding usage history 1082, and a day/time of use 1083.

### [Embodiment 8]

In Embodiment 8, a case is described in which a request regarding demand adjustment for the amount of power used is issued to an employee, in addition to the distribution of advertisement information in Embodiment 7. Aside from the differences described below, the various components of the system of Embodiment 8 have the same functions as the components of Embodiments 1 to 7 that are assigned the same reference characters, and thus, descriptions thereof are omitted.

A service provider such as an electric company or a company that employs employees can issue a request to users to adjust the amount of power used through the system described in Embodiment 8. For example, the public/private separation management system 100 may refer to the target condition data 109, specifies users who can accommodate the request to adjust the amount of power used, and issue an instruction to reduce power consumption by stopping the A/C unit, or to increase the power consumption by using a washing machine or dishwasher. This allows the company or the service provider to issue a request to adjust the power consumption based on the actual usage of the devices, which makes it possible to adjust the power consumption with a higher degree of accuracy. It is also possible to give points to the employees for accommodating the request.

### [Embodiment 9]

In Embodiment 9, a case is described in which recommendations on how to use an A/C unit are issued, in addition to sending information regarding the demand adjustment of the amount of power used, which was described in Embodiment 8. Aside from the differences described below, the various components of the system of Embodiment 9 have the same functions as the components of Embodiments 1 to 8 that are assigned the same reference characters, and thus, descriptions thereof are omitted.

The public/private separation management system 100 is able to determine whether the use of an A/C unit is appropriate relative to the outside temperature by combining the public/private separation data of an employee with the outside temperature data or data from a hygrothermograph installed inside of their room. For example, on a day on which the temperature is determined to exceed 30 degrees C on the basis of the weather data, if the power consumption of an A/C unit in the public/private separation data is low, the public/private separation management system 100 may issue a recommendation to turn down the thermostat to prevent heat stroke. On the contrary, if the power consumption of the A/C unit is high, which indicates the space might be cooled down too much, the public/private separation management system 100 may issue a recommendation to remind the user of turning up the thermostat of the A/C unit.

### [Embodiment 10]

In Embodiment 10, a case is described in which a degree of efficiency degradation of a device is estimated based on the power consumption of the device, and a recommendation to update the device is issued, in addition to the provision of recommendations on how to use an A/C unit, which was described in Embodiment 9. Aside from the differences described below, the various components of the system of Embodiment 10 have the same functions as the components of Embodiment 1 to 9 that are assigned the same reference characters, and thus, descriptions thereof are omitted.

The public/private separation management system 100 may provide a manufacturer of an in-use device with the used power amount data 101, so that the manufacturer can estimate the power consumption efficiency of the device on the basis of the power consumption data. If the estimated power consumption efficiency is significantly lower than the device specification, the manufacturer can provide a recommendation to replace the device to the user, who is using the device, through the public/private separation management system 100. This allows a device manufacturer to introduce its new products to users who are using older devices.

The present invention has been described in detail above with reference to the appended drawings, but the present invention is not limited to such specific configurations, and may include various modifications and equivalent configurations without departing from the scope of the appended claims.

The system according to an embodiment of the present invention may be configured as follows.

(1) An energy use purpose management system (public/private separation management system 100, for example) including: a processor (processor 111, for example); and a storage device (memory 112 or auxiliary storage device 113, for example), wherein the storage device stores used power amount information (used power amount data 101, for example) that indicates an amount of power used by each device, and condition information (public/private separation condition data 106, for example) that includes a condition to determine whether purposes of power use are private or work-related on the basis of the amount of power used by each device, and wherein the processor classifies an amount of power used included in the used power amount information as an amount of power used for private purposes or an amount of power used for work-related purposes (S101, for example).

This way, it is possible to provide a means for easily separating used power into private and work-related use for an employee who works at a location other than the workplace such as the primary or secondary residence of the employee.

(2) In (1) described above, the storage device further stores return rate information (point return rate data 103 and service conversion rate data 104, for example) to calculate a value to be returned to a user of power on the basis of an amount of power, and the processor calculates a value corresponding to the classified power amount, on the basis of the classified power amount and the return rate information.

This way, a company employing an employee can return a value corresponding to an amount of power used for work-related purposes on the basis of rules determined by the company.

(3) In (1) described above, the used power amount information includes information acquired by a measurement sensor (power amount measurement device 200 in FIG. 1, for example) that is installed in a distribution board and that separates a total amount of power used into an amount of power used by each device.

This increases convenience for users because they need to install the measurement sensor only at one location.

(4) In (1), the used power amount information includes information of used power amount measured by a measurement sensor (power amount measurement device 100 in FIG. 9 or 10) installed in at least one of an outlet, an outlet tap, or a power adaptor, and the condition information includes information that associates a used power amount measured by the measurement sensor with power use purposes.

This increases a degree of accuracy in device identification, which results in improved accuracy of classification. Also, when a measurement sensor is installed in an outlet tap or a power adaptor, by carrying the measurement sensor around, it is possible to classify an amount of power used at a location other than the primary residence or the like.

(5) In (1) described above, the used power amount information includes information on an amount of power used for each device that is measured by a measurement sensor (power amount measurement device 200 in FIG. 1, for example) installed in a device.

This increases a degree of accuracy in device identification, which results in improved accuracy of classification. Also, it is possible to classify an amount of power used by this device at a location other than the primary residence or the like.

(6) In (1) described above, the condition information is inputted through an audio input device (AI speaker 300, for example).

This increases convenience.

(7) In (1) described above, the condition information includes information on working hours of a user of the device, and the processor classifies the amount of power used by each device during the working hours of the user as an amount of power used for work-related purposes.

This increases a degree of accuracy in classification.

(8) In (1) described above, the used power amount information includes information indicating a place where power is used, and the condition information includes information that associates a place where power is used with power use purposes.

This increases a degree of accuracy in classification when the location and purpose of use match.

(9) In (1) described above, the processor calculates a CO2 emission amount from the classified power amount, and awards environmental value corresponding to the calculated CO2 emission amount.

This way, the company can report the CO2 generated through work performed by the employee in the employee's primary residence or the like in an environmental report or the like as a deduction by the company.

(10) In (2) described above, the storage device further stores usage history information (point usage history data 108, for example) of the user on the value return to the user and target condition information (target condition data 109, for example) including a condition of a usage history of a user to be chosen as a target of an advertisement, and the processor outputs an advertisement to the user if the usage history information of the user fulfills a condition included in the target condition information.

This supports marketing efforts of a company.

(11) In (2) described above, the storage device further stores usage history information of the user on the value return to the user and target condition information including conditions of the classified power amount and a usage history of a user to be chosen as a target of power demand adjustment, and the processor outputs a power demand adjustment request to the user if the classified power amount and the usage history information of the user fulfill conditions included in the target condition information.

This allows power consumption to be adjusted more reliably.

(12) In (1) described above, the processor sends information indicating the amount of power used by each device to a manufacturer of the device, and if information on a degree of degradation of the device estimated on the basis of the amount of power used by the device is received from the manufacturer of the device, the processor outputs the received information to a user of the device.

This increases convenience of users and creates opportunities for device manufacturers to increase the sales of their new products.

(13) In (1) described above, the condition information includes information that associates at least one of a device that uses power, a device that measures power, and a time at which power is used with power use purposes.

This allows for more accurate classification of power amounts by purposes of use.

(14) In (2) described above, the return rate information includes different return rates depending on purposes of use of the compensated value.

This allows a company to direct users (that is, employees of the company) to a service or the like that the company prefers.

The present invention is not limited to the embodiments described above, but includes various modifications. For example, the embodiments above were explained in detail so the present invention is understood more easily, and the present invention does not necessarily have to have all the configurations described above. It is also possible to replace a part of the configurations of one embodiment with a configuration of another embodiment, or to add a configuration of one embodiment to configurations of another embodiment. Furthermore, a part of the configurations of each embodiment may be removed, or added to or replaced with other configurations.

A part of all of the respective configurations, functions, processing units, processing means, and the like described above may be realized through hardware by designing into an integrated circuit, for example. The respective configurations, functions, and the like may be realized through software as a result of a processor interpreting and executing programs representing those functions. Information representing each function such as a program, a table, a file, or the like may be stored in a storage device such as a non-volatile semiconductor memory, a hard-disk drive, or an SSD (solid state drive), or a computer-readable persistent data storage medium such as an IC card, an SD card, or a DVD.

Furthermore, only the control lines and information lines considered necessary for explanation are shown, and not all of the control lines and information lines required for a product are necessarily shown. In actuality, almost all of the configurations may be considered mutually connected.

## Claims

1. An energy use purpose management system, comprising:
a processor (111); and
a storage device (113),
wherein the storage device (113) stores used power amount information that indicates an amount of power used by each device, and condition information that includes a condition to determine whether purposes of power use are private or work-related on the basis of the amount of power used by each device, and
wherein the processor (111) classifies an amount of power used included in the used power amount information as an amount of power used for private purposes or an amount of power used for work-related purposes.

2. The energy use purpose management system according to claim 1,
wherein the storage device (113) further stores return rate information to calculate a value to be returned to a user of power on the basis of an amount of power, and
wherein the processor (111) calculates a value corresponding to the classified power amount, on the basis of the classified power amount and the return rate information.

3. The energy use purpose management system according to claim 1,
wherein the used power amount information includes information acquired by a measurement sensor that is installed in a distribution board and that separates a total amount of power used into an amount of power used by each device.

4. The energy use purpose management system according to claim 1,
- wherein the used power amount information includes information of used power amount measured by a measurement sensor installed in at least one of an outlet, an outlet tap, or a power adaptor, and
wherein the condition information includes information that associates a used power amount measured by the measurement sensor with power use purposes.

5. The energy use purpose management system according to claim 1,
wherein the used power amount information includes information on the amount of power used by each device that is measured by a measurement sensor installed in the device.

6. The energy use purpose management system according to claim 1,
wherein the condition information is inputted through an audio input device.

7. The energy use purpose management system according to claim 1,
wherein the condition information includes information on working hours of a user of the device, and
wherein the processor (111) classifies the amount of power used by each device during the working hours of the user as an amount of power used for work-related purposes.

8. The energy use purpose management system according to claim 1,
wherein the used power amount information includes information indicating a place where power is used, and
wherein the condition information includes information that associates a place where power is used with power use purposes.

9. The energy use purpose management system according to claim 1,
wherein the processor calculates a CO2 emission amount from the classified power amount, and awards environmental value corresponding to the calculated CO2 emission amount.

10. The energy use purpose management system according to claim 2,
wherein the storage device (113) further stores usage history information of the user on the value returned to the user and target condition information including a condition of a usage history of a user to be chosen as a target of an advertisement, and
wherein the processor outputs an advertisement to the user if the usage history information of the user fulfills a condition included in the target condition information.

11. The energy use purpose management system according to claim 2,
wherein the storage device (113) further stores usage history information of the user on the value returned to the user and target condition information including conditions of the classified power amount and a usage history of a user to be chosen as a target of power demand adjustment, and
wherein the processor (111) outputs a power demand adjustment request to the user if the classified power amount and the usage history information of the user fulfill conditions included in the target condition information.

12. The energy use purpose management system according to claim 1,
wherein the processor (111) sends information indicating the amount of power used by each device to a manufacturer of the device, and if information on a degree of degradation of the device estimated on the basis of the amount of power used by the device is received from the manufacturer of the device, the processor (111) outputs the received information to a user of the device.

13. The energy use purpose management system according to claim 1,
wherein the condition information includes information that associates at least one of a device that uses power, a device that measures power, and a time at which power is used with power use purposes.

14. The energy use purpose management system according to claim 2,
wherein the return rate information includes different return rates depending on purposes of use of the returned value.

15. An energy use purpose management method performed by a computer system,
wherein the computer system includes a processor (111) and a storage device (113),
wherein the storage device (113) stores used power amount information that indicates an amount of power used by each device, and condition information that includes a condition to determine whether purposes of power use are private or work-related on the basis of the amount of power used by each device, and
wherein the energy use purpose management method comprises:
a step in which the processor (111) acquires the condition information;
a step in which the processor (111) acquires used power amount information indicating an amount of power used for each device, and classifies an amount of power included in the used power amount information as an amount of power used for private purposes or an amount of power used for work-related purposes, on the basis of the condition information; and
a step in which the processor (111) stores the classified power amount into the storage device (113).
